(19) Europäisches Patentamt

European Patent Office

Office européen des brevets

(11) Veröffentlichungsnummer: **0 384 235 B1**

(12) # EUROPÄISCHE PATENTSCHRIFT

(45) Veröffentlichungstag der Patentschrift: **10.05.95**

(21) Anmeldenummer: **90102534.6**

(22) Anmeldetag: **09.02.90**

(51) Int. Cl.6: **C08F 279/02**, C08F 265/08, C08F 2/22, C14C 11/00

(54) **Wässrige Kunstharzdispersionen.**

(30) Priorität: **18.02.89 DE 3905010**

(43) Veröffentlichungstag der Anmeldung:
**29.08.90 Patentblatt 90/35**

(45) Bekanntmachung des Hinweises auf die
Patenterteilung:
**10.05.95 Patentblatt 95/19**

(84) Benannte Vertragsstaaten:
**BE DE ES FR GB IT NL**

(56) Entgegenhaltungen:
**EP-A- 0 039 896**
**EP-A- 0 058 366**
**EP-A- 0 201 099**

**CHEMICAL ABSTRACTS, Band 86, 1977, Seite 17, Zusammenfassung Nr. 156214j,Columbus, Ohio, US; & DD-A-114 956**

(73) Patentinhaber: **BASF Aktiengesellschaft**
**Carl-Bosch-Strasse 38**
**D-67063 Ludwigshafen (DE)**

(72) Erfinder: **Meister, Martin, Dr.**
**Ziegelofenweg 7**
**D-6720 Speyer (DE)**
Erfinder: **Eckert, Guenter, Dr.**
**Flossbachstrasse 1**
**D-6703 Limburgerhof (DE)**
Erfinder: **Schmidt-Thuemmes, Juergen, Dr.**
**Mainstrasse 7**
**D-6708 Neuhofen (DE)**
Erfinder: **Zosel, Albrecht, Dr.**
**Ringweg 9**
**6940 Weinheim (DE)**

EP 0 384 235 B1

## Beschreibung

Die vorliegende Erfindung betrifft wäßrige Kunstharzdispersionen, dadurch erhältlich, daß man

A) 70 bis 97,5 Gew.-Teile einer Monomerenmischung, enthaltend

a) 40 bis 65 Gew.-% Butadien (Monomeres I),

b) 25 bis 35 Gew.-% Acrylnitril (Monomeres II),

c) 5 bis 15 Gew.-% Styrol (Monomeres III),

d) 2 bis 7 Gew.-% eines oder mehrere Amide von 3 bis 5 C-Atome enthaltenden $\alpha,\beta$-monoethylenisch ungesättigten Monocarbonsäuren (Monomere IV),

e) 0 bis 10 Gew.-% sonstige copolymerisierbare Monomere (Monomere V) und

B) 2,5 bis 30 Gew.-Teile einer oder mehrerer copolymerisierbarer Monovinylverbindungen (Monomere VI)

bei einer Temperatur von 30 bis 70°C in wäßriger Emulsion so copolymerisiert, daß man wenigstens 50 Gew.-% der Monomerenmischung A bis zu einem Umsatz von wenigstens 80 % vorpolymerisiert und anschließend die Polymerisation unter Zugabe der verbliebenen Monomeren A sowie der Monomeren B fortsetzt.

Außerdem betrifft die Erfindung das Verfahren zur Herstellung dieser Dispersionen sowie die Verwendung dieser Dispersionen als Bindemittel für Schutzschichten auf Leder.

Aus der EP-A 058 366 sind wäßrige Dispersionen bekannt, die durch Pfropfpolymerisation eines Pfropfsubstrates auf Basis von Styrol, Butadien, Isopren, Chloropren, Acrylnitril, (Meth)-Acrylsäureestern, (Meth)Acrylsäure, Itaconsäure, Fumarsäure, Maleinsäure, Vinylacetat oder Vinylchlorid oder von Mischungen hieraus auf Vinylmonomere wie ungesättigte Carbonsäureamide oder Vinylpyrrolidon erhältlich sind. Diese Dispersionen werden u.a. als Überzugsmassen für Leder verwendet.

Aus der EP-A 039 896 sind Kautschuklatices zur Behandlung von Leder bekannt, die auf einer Monomerenmischung aus 70 Gew.-% Butadien, 26 Gew.-% Acrylnitril und 4 Gew.-% Methacrylsäure basieren (gemäß dortigem Beispiel 3 ≙ Latex C). Diese Latices gewährleisten verbesserte Abrieb- und Reißfestigkeit des Leders im trockenen und nassen Zustand.

Aus der EP-B 29170 sind carboxylierte Synthesekautschuk-Dispersionen bekannt, die nach Zusatz Von Oxiden und/oder Hydroxiden zweiwertiger Metalle als Bindemittel für Schutzschichten auf Leder empfohlen werden, um diesen Schutzschichten sowohl eine hohe Trocken- als auch eine hohe Naßknickfestigkeit zu verleihen. Die anwendungstechnischen Eigenschaften dieser Bindemittel vermögen jedoch bezüglich der Naßknickfestigkeit der resultierenden Lederschutzschichten nicht voll zu befriedigen. Außerdem weisen sie eine nicht voll befriedigende Kältebruchfestigkeit auf.

Der vorliegenden Erfindung lag daher die Aufgabe zugrunde, den geschilderten Nachteilen mittels Kunstharzdispersionen abzuhelfen, die insbesondere als Bindemittel für Schutzschichten auf Leder geeignet sind. Demgemäß wurden die eingangs definierten Kunstharzdispersionen gefunden.

Als Monomere IV werden mit Vorteil die Amide der Acrylsäure oder Methacrylsäure einpolymerisiert und als Monomere V kommen insbesondere die Acryl- und Methacrylsäureester von $C_1$- bis $C_8$-Alkanolen, Methacrylnitril, niedere Alkylgruppen tragende N-Alkylderivate von Acryl- und Methacrylamid sowie vinylaromatische Verbindungen wie Styrol in Betracht. Bevorzugte Ester der Acrylsäure sowie der Methacrylsäure sind Methylacrylat, Methylmethacrylat, n-Butylacrylat, n-Butylmethacrylat sowie 2-Ethylhexylacrylat, während von den niedere Alkylgruppen tragenden N-Alkylderivaten des Acryl- und Methacrylamids N-Methylmethacrylamid bevorzugt einpolymerisiert wird.

Als Monomere VI kommen vor allem Acrylsäure, Methacrylsäure und die Monomeren V in Betracht. Mit besonderem Vorteil werden als Monomere VI Styrol und Methylmethacrylat einpolymerisiert. Bezogen auf die Monomeren A werden in vorteilhafter Weise 3 bis 22 Gew.-% Monomere B eingebaut.

Die Herstellung der erfindungsgemäßen Kunstharzdispersionen erfolgt zweckmäßigerweise in einem Druckgefäß durch Polymerisation der jeweiligen Monomeren in wäßrigem Medium unter den bekannten Bedingungen der Emulsionspolymerisation in Gegenwart von wasserlöslichen radikalbildenen Initiatoren und Emulgatoren sowie gegebenenfalls in Gegenwart von Reglern, Puffersubstanzen sowie weiterer Hilfsmitteln, indem man wenigstens 50 Gew.-% der Monomerenmischung A bis zu einem Umsatz von wenigstens 80 % vorpolymerisiert und anschließend die Polymerisation unter Zugabe der verbliebenen Monomeren A sowie der Monomeren B fortsetzt. Die Polymerisationstemperatur beträgt 30 bis 70, bevorzugt 45 bis 65°C.

Die Vorpolymerisation, die definitionsgemäß die Gesamtmenge der Monomeren A umfassen kann, ist sowohl als Chargenprozeß, als auch als Zulaufverfahren durchführbar. Bevorzugt ist das Zulaufverfahren, bei dem man einen vorgelegten Teil des Polymerisationsansatzes auf die Polymerisationstemperatur erwärmt und anschließend den Rest unter Aufrechterhaltung der Polymerisationstemperautr kontinuierlich zuführt. Dabei können die Monomeren A in reiner oder in emulgierter Form oder als wäßrige Lösung zugeführt werden. Die Zufuhr der Monomeren A als wäßrige Emulsion wird vorzugsweise angewandt. Die Vorlage kann sowohl nur Wasser, als auch andere an der Vorpolymerisation beteiligte Substanzen wie Monomere A, Initiatoren oder Emulgatoren umfassen. Mit besonderem Vorteil enthält die Vorlage 25 bis 35 Gew.-% der für die gesamte Emulsionspolymerisation eingesetzten Wassermenge, 5 bis 10 Gew.-% der Gesamtmenge an Monomeren A, die Gesamtmenge an Initiatoren sowie einen der vorgelegten Menge an Monomeren A entsprechenden Teil der Gesamtmenge an Emulgatoren.

Als Chargenprozeß nimmt die Vorpolymerisation je nach eingesetzter Menge an Monomeren A in der Regel 2 bis 10 h in Anspruch. Beim Zulaufverfahren erstreckt sich die kontinuierliche Zufuhr der vorzupolymerisierenden Monomeren A normalerweise über den selben Zeitraum.

Die Fortsetzung der Polymerisation unter Zugabe der verbliebenen Monomeren A sowie der Monomeren B schließt unmittelbar an die Vorpolymerisation an, wobei die Monomeren wiederum in reiner oder emulgierter Form oder als wäßrige Lösung, auf einmal oder kontinuierlich zugeführt werden können. Dabei kann die Zugabe der verbliebenen Monomeren A und der Monomeren B sowohl räumlich getrennt als auch über ein gemeinsames Zulaufgefäß sowie in beliebiger Abfolge vorgenommen werden. Während die Zufuhrgeschwindigkeit der Monomeren B von untergeordneter Bedeutung ist, sollte die Zufuhr der verbliebenen Monomeren A nicht langsamer erfolgen als im Falle einer Vorpolymerisation nach dem Zulaufverfahren. Bei einer bevorzugten Ausführungsform beginnt die Zugabe an Monomeren B, wenn die Vorlage bereits 80 % der Gesamtmenge an Monomeren A im Rahmen einer Vorpolymerisation nach dem Zulaufverfahren zugeführt enthält, wobei die Zugabe der Monomeren B synchron zur kontinuierlichen Zufuhr der verbliebenen Monomeren A vorgenommen wird. Nach beendeter Monomerenzufuhr wird zweckmäßigerweise noch einige Stunden nachpolymerisiert.

Als wasserlösliche Polymerisationsinitiatoren eignen sich z.B. anorganische Peroxoverbindungen wie Wasserstoffperoxid, Natrium-, Kalium- oder Ammoniumperoxidisulfat, ferner organische Peroxide oder Hydroperoxide wie tert.-Butylhydroperoxid oder tert.-Butylperbenzoat. Bezogen auf die Gesamtmenge der eingesetzten Monomeren liegt die eingesetzte Initiatormenge im Bereich von 0,05 bis 0,6 Gew.-%. Die organischen Peroxoverbindungen werden bevorzugt in Kombination mit geeigneten Reduktionsmitteln angewendet. Als Beispiele solcher Reduktionsmittel seien genannt: Schwefeldioxid, Thiosulfat, Dithionit, Hydrazinsulfat, Glucose, Ascorbinsäure oder das Natriumsalz der Hydroxymethansulfinsäure.

Als Emulgatoren haben sich insbesondere Alkalimetallsalze höherer Fettalkoholsulfate wie Na-n-Laurylsulfat, ethoxylierte Alkylphenole (EO-Grad: 3 bis 30, Alkylrest: $C_8$ bis $C_{10}$) sowie ethoxylierte Fettalkohole (EO-Grad: 5 bis 50, Alkylrest: $C_8$ bis $C_{25}$) bewährt. Bevorzugt werden Emulgatorgemische angewendet. Mitunter erweist sich der Zusatz von Puffersubstanzen wie Tetranatriumdiphosphat als vorteilhaft, um einen pH-Wert des Polymerisationsmediums von 2 bis 10 einzustellen. Bevorzugt wird die Emulsionspolymerisation bei einem pH-Wert von 4 bis 9 durchgeführt. Kettenübertragungsmittel wie Tetrabrommethan, Tetrabromethan oder höhere Alkylmercaptane wie tert.-Dodecylmercaptan lassen sich bei der Polymerisation ebenfalls mit verwenden. Ihre Zugabe ist insbesondere dann von Vorteil, wenn die Emulsionspolymerisation bei höheren Temperaturen durchgeführt wird. Der Feststoffgehalt der erfindungsgemäßen Dispersionen ist von untergeordneter Bedeutung. Zweckmäßigerweise liegt er bei 30 bis 60 Gew.-%. Die erfindungsgemäßen wäßrigen Kunstharzdispersionen sind bereits für sich allein als Bindemittel zur Herstellung von Schutzschichten mit hoher Kältebruchfestigkeit sowie hoher Trocken- und Naßknickfestigkeit besser geeignet als die carboxylierten Synthesekautschuk-Dispersionen aus der EP-B 29170 nach Zusatz von Oxiden und/oder Hydroxiden zweiwertiger Metalle. Ihre Anwendung kann sowohl auf vollnarbigem oder geschliffenem Leder, als auch auf Spaltledern oder Lederfasermaterialien erfolgen. Gewöhnlich werden sie mit einem Feststoffgehalt von 15 bis 40 Gew.-% eingesetzt.

Modischen Erfordernissen entsprechend werden Lederschutzschichten im allgemeinen farbig aufgebracht. Hierzu werden in der Regel in die als Bindemittel dienenden Kunstharzdispersionen wäßrige Pigmentzubereitungen eingerührt, die normalerweise als wesentliche Bestandteile Wasser, feinteilige Pigmente die anorganischer oder organischer Herkunft sein können (z.B. Eisenoxid, Titandioxid, Azopigmente, Phthalocyanine oder Ruß), Dispergiermittel sowie gegebenenfalls Verdicker wie Casein, thermoplastische oder nichtthermoplastische Bindemittel sowie weitere Hilfsmittel wie Konservierungsstoffe enthalten.

Die so erhältlichen farbigen Lederschutzzubereitungen werden üblicherweise durch Gieß-, Rakel-, Streich-, Spritz-, Bürst- oder Plüschverfahren auf die Leder aufgebracht. Im allgemeinen wird zunächst eine Grundschutzschicht aufgetragen, auf die nach Zwischenbügeln ein Deckauftrag derselben Zusammensetzung aufgebracht wird. Nach erfolgter Trocknung der Deckschicht eignen sich unter anderem Nitrocellulose oder andere Celluloseester als Bindemittel enthaltende Appreturen, um der Schutzschicht die gewünschte Glanzstufe bzw. physikalische Echtheiten zu verleihen.

Beispiele

Beispiel 1

Herstellung verschiedener Kunstharzdispersionen B2 bis B8

B2

In einem Druckgefäß wurde ein Gemisch aus 12,6 g Natriumperoxidisulfat, 1,68 kg Wasser und 9 % des Zulaufs 1 vorgelegt und innerhalb von 30 min auf die Polymerisationstemperatur von 55°C erhitzt. Danach wurde innerhalb von 6 h unter Aufrechterhaltung der Polymerisationstemperatur die Restmenge an Zulauf 1 zugeführt. Nach Beendigung der Zufuhr an Zulauf 1 wurde innerhalb von 30 min Zulauf 2 zugeführt. Anschließend wurde noch 8,5 h nachpolymerisiert. Die erhaltene Dispersion wies einen Feststoffgehalt von 34,2 Gew.-% auf.

Zulauf 1:

3,1 kg Wasser
2,3 kg Butadien
1,0 kg Acrylnitril
200 g Styrol
200 g Methacrylamid
530 g Emulgator I
420 g einer 20 gew.-%igen wäßrigen Lösung von ethoxyliertem Isooctylphenol, EO-Grad: 25 (Emulgator III)
12,6 g Tetranatriumdiphosphat
33,5 g tert.-Dodecylmercaptan

Zulauf 2:

210 g Styrol
210 g Methacrylsäure

B3

In einem Druckgefäß wurde ein Gemisch aus 12 g Natriumperoxidisulfat, 1,6 kg Wasser und 5,8 % des Zulaufs 1 vorgelegt und innerhalb von 30 min auf die Polymerisationstemperatur von 55°C erhitzt. Danach wurde innerhalb von 3 h unter Aufrechterhaltung der Polymerisationstemperatur über ein Zulaufgefäß 1 die Restmenge an Zulauf 1 zugeführt, die während der letzten Stunde durch den über ein Zulaufgefäß 2 zugeführten Zulauf 2 ergänzt wurde. Nach beendeter Monomerenzufuhr wurde noch 8,5 h nachpolymerisiert. Die resultierende Dispersion wies einen Feststoffgehalt von 38,7 % auf.

Zulauf 1:

3,4 kg Wasser
2,2 kg Butadien
1,4 kg Acrylnitril
200 g Styrol
200 g Methacrylamid
540 g Emulgator I

140 g Emulgator II
12 g Tetranatriumdiphosphat
32 g tert.-Dodecylmercaptan

Zulauf 2:

269 g Wasser
201 g Methacrylsäure

B4

In einem Druckgefäß wurde ein Gemisch aus 11,9 g Natriumperoxidisulfat, 1,59 kg Wasser und 8,9 % des Zulaufs 1 vorgelegt und innerhalb von 30 min auf die Polymerisationstemperatur von 65°C erhitzt. Danach wurde innerhalb von 6 h unter Aufrechterhaltung der Polymerisationstemperatur über ein Zulaufgefäß 1 die Restmenge an Zulauf 1 zugeführt, die während der letzten 30 min durch den über ein Zulaufgefäß 2 zugeführten Zulauf 2 ergänzt wurde. Vor Beginn von Zulauf 2 wurde der Reaktionsmischung eine Lösung von 1,8 g Natriumperoxidisulfat in 176 g Wasser auf einmal zugefügt. Nach beendeter Monomerenzufuhr wurde noch 6 h nachpolymerisiert. Es wurde eine Dispersion mit einem Feststoffgehalt von 39,4 Gew.-% erhalten.

Zulauf 1:

3,3 kg Wasser
2,2 kg Butadien
1,0 kg Acrylnitril
200 g Styrol
200 g Methacrylamid
480 g Emulgator I
140 g Emulgator II
12 g Tetranatriumdiphosphat
40 g Dodecylmercaptan

Zulauf 2:

264 g Wasser
198 g Methacrylsäure
198 g Methylmethacrylat
26,4 g Emulgator I

B5

In einem Druckgefäß wurde ein Gemisch aus 12,1 g Natriumperoxidisulfat, 1,59 kg Wasser und 8,7 % des Zulaufs 1 vorgelegt und innerhalb von 30 min auf die Polymerisationstemperatur von 55°C erhitzt. Danach wurden innerhalb von 6 h unter Aufrechterhaltung der Polymerisationstemperatur die Restmenge an Zulauf 1 und im Anschluß daran innerhalb von 30 min 202 g Styrol als Zulauf 2 zugeführt. Nach beendeter Monomerenzufuhr wurde noch 8,5 h nachpolymerisiert.

Zulauf 1:

3,4 kg Wasser
2,2 kg Butadien
1,0 kg Acrylnitril
200 g Styrol
200 g Methacrylamid
500 g Emulgator I
400 g Emulgator III

12 g Tetranatriumdiphosphat

32 g tert.-Dodecylmercaptan

B6

In einem Druckgefäß wurde ein Gemisch aus 10,6 g Natriumperoxidisulfat, 1,6 kg Wasser und 9,4 % des Zulaufs 1 vorgelegt und innerhalb von 30 min auf die Polymerisationstemperatur von 55°C erhitzt. Danach wurde innerhalb von 6 h unter Aufrechterhaltung der Polymerisationstemperatur über ein Zulaufgefäß 1 die Restmenge an Zulauf 1 zugeführt, die während der letzten 30 min durch die über die Zulaufgefäße 2 und 3 zugeführten Zuläufe 2 und 3 ergänzt wurde. Nach beendeter Monomerenzufuhr wurde noch 7,5 h nachpolymerisiert. Der Feststoffgehalt der erhaltenen Dispersion betrug 40,1 Gew.-%.

Zulauf 1:

2,9 kg Wasser

2,3 kg Butadien

1,0 kg Acrylnitril

200 g Styrol

200 g Methacrylamid

520 g Emulgator I

310 g 20 gew.-%ige wäßrige Lösung eines Gemisches aus ethoxylierten linearen $C_{12}$- bzw. $C_{14}$-Alkanolen, EO-Grad: 20 (Emulgator IV)

12 g Tetranatriumdiphosphat

33,3 g tert.-Dodecylmercaptan

Zulauf 2:

269 g Wasser

208 g Methacrylsäure

208 g Methylmethacrylat

26 g Emulgator I

Zulauf 3:

Lösung von 1,85 g Natriumperoxidisulfat in 109 g Wasser.

B7

In einem Druckgefäß wurde ein Gemisch aus 10,32 g Natriumperoxidisulfat, 1,62 kg Wasser und 9,1 % des Zulaufs 1 vorgelegt und innerhalb von 30 min auf die Polymerisationstemperatur von 55°C erhitzt. Danach wurde innerhalb von 5,5 h unter Aufrechterhaltung der Polymerisationstemperatur die Restmenge an Zulauf 1 zugeführt. Nach Beendigung der Zufuhr an Zulauf 1 wurde innerhalb von 30 min Zulauf 2 zugeführt. Vor Beginn von Zulauf 2 wurde der Reaktionsmischung eine Lösung von 1,8 g Natriumperoxidisulfat in 180 g Wasser auf einmal zugegeben.Nach beendeter Monomerenzufuhr wurde noch 6 h nachpolymerisiert. Die resultierende Dispersion wies einen Feststoffgehalt von 37,9 % auf.

Zulauf 1:

3,2 kg Wasser

2,2 kg Butadien

1,0 kg Acrylnitril

200 g Styrol

200 g Methacrylamid

480 g Emulgator I

140 g Emulgator II

12 g Tetranatriumdiphosphat

32 g Dodecylmercaptan

Zulauf 2:

269 g Wasser

202 g Methacrylsäure

202 g Styrol

227 g Emulgator I

B8

In einem Druckgefäß wurde ein Gemisch aus 12 g Natriumperoxidisulfat, 1,6 kg Wasser und 8,9 % des Zulaufs 1 vorgelegt und innerhalb von 30 min auf die Polymerisationstemperatur von 55°C erhitzt. Danach wurden innerhalb von 5 h unter Aufrechterhaltung der Polymerisationstemperatur über ein Zulaufgefäß 1 5/6 der Restmenge des Zulaufs 1 zugeführt. Dann wurde zu dem im Zulaufgefäß 1 verbliebenen 1/6 des Zulaufs 1 der Zulauf 2 zugemischt und die dabei erhaltene Mischung im Verlauf von 1 h der Reaktionsmischung zugeführt. Nach beendeter Monomerenzufuhr wurde noch 8,5 h nachpolymerisiert. Der Feststoffgehalt der resultierenden Dispersion betrug 39,2 Gew.-%.

Beispiel 2

Prüfung verschiedener Lederschutzschichten

100 g einer wäßrigen Pigmentzubereitung, die als wesentliche Bestandteile 12 Gew.-% feinteiligen Ruß, 85 Gew.-% Wasser und 2,5 Gew.-% Dispergiermittel enthielt, wurden jeweils in 400 g der Dispersionen B2 und B3 sowie B7 und B8, deren Feststoffgehalt zuvor durch Verdünnen mit Wasser auf 30 Gew.-% eingestellt worden war, eingerührt. Von den erhaltenen Zubereitungen wurden mit Hilfe eines mit saugfähigem Plüsch überzogenen Streichbretts 20 g/m² auf Schleifbox-Leder aufgetragen und bei 90°C gebügelt. Anschließend wurden von denselben Zubereitungen weitere 4 g/m² mit dem Plüschbrett und die dann noch bis zur vollständigen Deckung benötigte Restmenge durch Spritzen aufgetragen. Danach wurde bei 80°C luftgetrocknet und eine Nitrocellulose als Bindemittel enthaltende Appretur aufgetragen. Von den so hergestellten Lederschutzschichten wurde anschließend nach den Methoden der internationalen Union der Leder-Chemiker-Verbände (I.U.P.-Methoden) die Kältebruchfestigkeit, Trockenknickfestigkeit (50 000 Knickungen mit einem Bally-Flexometer) und die Naßknickfestigkeit (20 000 Knickungen mit einem Bally-Flexometer) bestimmt. Die Ergebnisse sind aus Tabelle 1 ersichtlich. Außerdem enthält Tabelle 1 das Ergebnis eines Vergleichsversuchs V1, bei dem an Stelle einer erfindungsgemäßen Dispersion ein Gemisch enthaltend 5 Teile Latex A und 1 Teil ZnO-haltiger Paste A gemäß der EP-B 29170 eingesetzt wurde.

Tabelle 1

| | Verwendete Dispersionen | | | | |
|---|---|---|---|---|---|
| | B2 | B3 | B7 | B8 | V1 |
| Kältebruchfestigkeit | sehr gut | sehr gut | gut | sehr gut | befriedigend |
| Trockenknickfestigkeit | sehr gut | gut | sehr gut | sehr gut | sehr gut |
| Naßknickfestigkeit | sehr gut | gut | sehr gut | sehr gut | mangelhaft |

**Patentansprüche**
**Patentansprüche für folgende Vertragsstaaten : BE, DE, FR, GB, IT, NL**

1. Wäßrige Kunstharzdispersionen, dadurch erhältlich, daß man
   A) 70 bis 97,5 Gew.-Teile einer Monomerenmischung enthaltend
      a) 40 bis 65 Gew.-% Butadien (Monomeres I),
      b) 25 bis 35 Gew.-% Acrylnitril (Monomeres II),
      c) 5 bis 15 Gew.-% Styrol (Monomeres III),
      d) 2 bis 7 Gew.-% eines oder mehrerer Amide von 3 bis 5 C-Atome enthaltenden α,ß-monoethylenisch ungesättigten Monocarbonsäuren (Monomere IV),
      e) 0 bis 10 Gew.-% sonstige copolymerisierbare Monomere (Monomere V) und
   B) 2,5 bis 30 Gew.-Teile einer oder mehrer copolymerisierbarer Monovinylverbindungen (Monomere VI)
   bei einer Temperatur von 30 bis 70 °C in wäßriger Emulsion so copolymerisiert, daß man wenigstens 50 Gew.-% der Monomerenmischung A bis zu einem Umsatz von wenigstens 80 % vorpolymerisiert und anschließend die Polymerisation unter Zugabe der verbliebenen Monomeren A sowie der Monomeren B fortsetzt.

2. Verfahren zur Herstellung wäßriger Kunstharzdispersionen durch Copolymerisation von
   A) 70 bis 97,5 Gew.-Teilen einer Monomerenmischung, enthaltend
      a) 40 bis 65 Gew.-% Butadien (Monomeres I),
      b) 25 bis 35 Gew.-% Acrylnitril (Monomeres II),
      c) 5 bis 15 Gew.-% Styrol (Monomeres III),
      d) 2 bis 7 Gew.-% eines oder mehrerer Amide von 3 bis 5 C-Atome enthaltenden α,ß-monoethylenisch ungesättigten Monocarbonsäuren (Monomere IV),
      e) 0 bis 10 Gew.-% sonstige copolymerisierbare Monomere (Monomere V) und
   B) 2,5 bis 30 Gew.-Teilen eines Gemisches aus copolymerisierbaren Monovinylverbindungen (Monomere VI)
   in wäßriger Emulsion bei einer Temperatur von 30 bis 70 °C, dadurch gekennzeichnet, daß man wenigstens 50 Gew.-% der Monomerenmischung A bis zu einem Umsatz von wenigstens 80 % vorpolymerisiert und anschließend die Polymerisation unter Zugabe der verbliebenen Monomeren A sowie der Monomeren B fortsetzt.

3. Verwendung der wäßrigen Kunstharzdispersionen gemäß Anspruch 1 als Bindemittel für Schutzschichten auf Leder.

**Patentansprüche für folgenden Vertragsstaat : ES**

1. Verfahren zur Herstellung wäßriger Kunstharzdispersionen durch Copolymerisation von

A) 70 bis 97,5 Gew.-Teilen einer Monomerenmischend, enthaltend

a) 40 bis 65 Gew.-% Butadien (Monomeres 1),

b) 25 bis 35 Gew.-% Acrylnitril (Monomeres II),

c) 5 bis 15 Gew.-% Styrol (Monomeres III),

d) 2 bis 7 Gew.-% eines oder mehrerer Amide von 3 bis 5 C-Atome enthaltenden α,β-monoethylenisch ungesättigten Monocarbonsäuren (Monomere IV),

e) 0 bis 10 Gew.-% sonstige copolymerisierbare Monomere (Monomere V) und

B) 2,5 bis 30 Gew.-Teilen eines Gemisches aus copolymerisierbaren Monovinylverbindungen (Monomere VI)

in wäßriger Emulsion bei einer Temperatur von 30 bis 70°C, dadurch gekennzeichnet, daß man wenigstens 50 Gew.-% der Monomerenmischung A bis zu einem Umsatz von wenigstens 80 % vorpolymerisiert und anschließend die Polymerisation unter Zugabe der verbliebenen Monomeren A sowie der Monomeren B fortsetzt.

2. Verwendung der nach einem Verfahren gemäß Anspruch 1 hergestellten wäßrigen Kunstharzdispersionen als Bindemittel für Schutzschichten auf Leder.

**Claims**
**Claims for the following Contracting States:**
**BE, DE, FR, GB, IT, NL**

1. An aqueous synthetic resin dispersion obtainable by copolymerizing

A) from 70 to 97.5 parts by weight of a monomer mixture containing

a) from 40 to 65% by weight of butadiene (monomer I),

b) from 25 to 35% by weight of acrylonitrile (monomer II),

c) from 5 to 15% by weight of styrene (monomer III),

d) from 2 to 7% by weight of one or more amides of α,β-monoethylenically unsaturated monocarboxylic acids of 3 to 5 carbon atoms (monomers IV) and

e) from 0 to 10% by weight of other copolymerizable monomers (monomers V)

and

B) from 2.5 to 30 parts by weight of one or more copolymerizable monovinyl compounds (monomers VI)

at from 30 to 70°C in aqueous emulsion so that not less than 50% by weight of the monomer mixture A is prepolymerized to a conversion of not less than 80%, and then continuing the polymerization with the addition of the remaining monomers A and the monomers B.

2. A process for the preparation of an aqueous synthetic resin dispersion by copolymerization of

A) from 70 to 97.5 parts by weight of a monomer mixture containing

a) from 40 to 65% by weight of butadiene (monomer I),

b) from 25 to 35% by weight of acrylonitrile (monomer II),

c) from 5 to 15% by weight of styrene (monomer III),

d) from 2 to 7% by weight of one or more amides of α,β-monoethylenically unsaturated monocarboxylic acids of 3 to 5 carbon atoms (monomers IV) and

e) from 0 to 10% by weight of other copolymerizable monomers (monomers V)

and

B) from 2.5 to 30 parts by weight of a mixture of copolymerizable monovinyl compounds (monomers VI)

in aqueous emulsion at from 30 to 70°C, wherein not less than 50% by weight of the monomer mixture A is prepolymerized to a conversion of not less than 80%, and the polymerization is then continued with the addition of the remaining monomers A and the monomers B.

3. Use of an aqueous synthetic resin dispersion as claimed in claim 1 as a binder for a protective coat on leather.

**Claims for the following Contracting State : ES**

1. A process for the preparation of an aqueous synthetic resin dispersion by copolymerization of

A) from 70 to 97.5 parts by weight of a monomer mixture containing

a) from 40 to 65% by weight of butadiene (monomer I),

b) from 25 to 35% by weight of acrylonitrile (monomer II),

c) from 5 to 15% by weight of styrene (monomer III),

d) from 2 to 7% by weight of one or more amides of $\alpha,\beta$-monoethylenically unsaturated monocarboxylic acids of 3 to 5 carbon atoms (monomers IV) and

e) from 0 to 10% by weight of other copolymerizable monomers (monomers V)

and

B) from 2.5 to 30 parts by weight of a mixture of copolymerizable monovinyl compounds (monomers VI)

in aqueous emulsion at from 30 to 70°C, wherein not less than 50% by weight of the monomer mixture A is prepolymerized to a conversion of not less than 80%, and the polymerization is then continued with the addition of the remaining monomers A and the monomers B.

2. Use of an aqueous synthetic resin dispersion prepared by a process as claimed in claim 1 as a binder for a protective coat on leather.

## Revendications
## Revendications pour les Etats contractants suivants : BE, DE, FR, GB, IT, NL

1. Dispersions aqueuses de résine synthétique, préparées de sorte que

A) 70 à 97,5 parties en poids d'un mélange de monomères contenant

a) 40 à 65 % en poids de butadiène (monomère I),

b) 25 à 35 % en poids d'acrylonitrile (monomère II),

c) 5 à 15 % en poids de styrène (monomère III),

d) 2 à 7 % en poids d'un ou de plusieurs amides d'acides monocarboxyliques à insaturation monoéthylènique $\alpha,\beta$ et comportant 3 à 5 atomes de carbone (monomères IV),

e) 0 à 10 % en poids d'autres monomères copolymérisables (monomères V),

et

B) 2,5 à 30 parties en poids d'un ou de plusieurs composés monovinyliques copolymérisables (monomères VI)

sont copolymérisées en émulsion aqueuse à une température de 30 à 70°C, de telle sorte qu'au moins 50 % en poids du mélange de monomères A soient prépolymérisés avec un degré de transformation d'au moins 80 % et qu'ensuite la polymérisation se poursuive avec le rajout des monomères A restants ainsi que des monomères B.

2. Procédé de préparation de dispersions aqueuses de résine synthétique par copolymérisation de

A) 70 à 97,5 parties en poids d'un mélange de monomères contenant

a) 40 à 65 % en poids de butadiène (monomère I),

b) 25 à 35 % en poids d'acrylonitrile (monomère II),

c) 5 à 15 % en poids de styrène (monomère III),

d) 2 à 7 % en poids d'un ou de plusieurs amides d'acides monocarboxyliques à insaturation monoéthylènique $\alpha,\beta$ et comportant 3 à 5 atomes de carbone (monomères IV),

e) 0 à 10 % en poids d'autres monomères copolymérisables (monomères V),

et de

B) 2,5 à 30 parties en poids d'un ou de plusieurs composés monovinyliques copolymérisables (monomères VI)

en émulsion aqueuse à une température de 30 à 70°C, caractérisé en ce qu'au moins 50 % en poids du mélange de monomères A sont prépolymérisés avec un degré de transformation d'au moins 80% et qu'ensuite la polymérisation se poursuit avec le rajout des monomères A restants ainsi que des monomères B.

3. Utilisation des dispersions aqueuses de résine synthétique préparées selon la revendication 1 comme agent liant pour des couches de protection du cuir.

## Revendications pour l'Etat contractant suivant : ES

1. Procédé de préparation de dispersions aqueuses de résine synthétique par copolymérisation de

A) 70 à 97,5 parties en poids d'un mélange de monomères contenant

a) 40 à 65 % en poids de butadiène (monomère I),

b) 25 à 35 % en poids d'acrylonitrile (monomère II),

c) 5 à 15 % en poids de styrène (monomère III),

d) 2 à 7 % en poids d'un ou de plusieurs amides d'acides monocarboxyliques à insaturation éthylènique $\alpha,\beta$ et comportant 3 à 5 atomes de carbone (monomères IV),

e) 0 à 10 % en poids d'autres monomères copolymérisables (monomères V),

et de

B) 2,5 à 30 parties en poids d'un ou de plusieurs composés monovinyliques copolymérisables (monomères VI)

en émulsion aqueuse à une temperature de 30 à 70°C, caractérisé en ce qu'au moins 50% en poids du mélange de monomères A sont prépolymérisés jusqu'à un degré de transformation d'au moins 80% et qu'ensuite la polymérisation se poursuit avec le rajout des monomères A restants ainsi que des monomères B.

2. Utilisation des dispersions aqueuses de résine synthétique, préparées à l'aide d'un procédé selon la revendication 1, comme agent liant pour des couches de protection du cuir.